# EUROPÄISCHE PATENTANMELDUNG

(11) **EP 1 046 625 A2**
(43) Veröffentlichungstag der Anmeldung: **25.10.2000**
(21) Anmeldenummer: 00108278.3
(22) Anmeldetag: 14.04.2000
(51) Int. Cl.: C05F 11/10

(54) **Biologisches untoxisches pflanzenstärkendes und wachstumsförderndes Mittel und Verfahren zur Behandlung von Pflanzensubstraten**

(30) Priorität: 22.04.1999 DE 29907177 U; 18.05.1999 DE 19922744
(71) Anmelder: Arconia GmbH, 7002 Chur (CH)
(72) Erfinder: Kern, Ralf M., 82057 Icking b. München (DE)
(74) Vertreter: Kern, Ralf M., Dipl.-Ing.

(57) **Zusammenfassung**

Es handelt sich um ein biologisches, atoxisches Pflanzenstärkungsmittel und wachstumsförderndes Mittel mit einer oder mehreren Lebensmittel-Konservierungsstoffen sowie mindestens einer nicht-toxischen, insbesondere organischen Säure.

Weiterhin handelt es sich um ein Verfahren zur Behandlung von Pflanzen-Wachstumssubstraten wie Pflanzenkulturwasser, Ackererde, Humus und Pflanzenkulturerde, insbesondere unter Verwendung des oben genannten Mittels zur Stärkung des Pflanzenwachstums und Förderung des Ertrags.

## Beschreibung

Die Erfindung betrifft ein biologisches untoxisches Pflanzenstärkungs- und wachstumsförderndes Mittel.

Die Aufgabe, ein Pflanzenstärkungsmittel der vorgenannten Art zu schaffen, welches in synergistischer Wirkungsweise bei besonders geringer Konzentration der beteiligten Stoffe sowohl die Vitalität von Pflanzen bei der Keim-und Wurzelbildung und den Pflanzenwuchs in jeder Weise, z. B. kräftigem und beschleunigtem Wuchs sowie die Fruchtausbildung fördert, als auch völlig untoxisch und umweltschonend sowie vollständig biologisch abbaubar ist, wird überraschenderweise durch eine synergistisch wirkende Kombination aus einem oder mehreren Lebensmittel-Konservierungsstoffen sowie mindestens einer nichttoxischen, insbesondere organischen Säure gelöst.

Dabei ist das erfindungsgemäße Mittel insbesondere zugleich auch keimreduzierend und haut-, sogar schleimhautverträglich, also völlig gefahrlos für Mensch und Tier bzw. Flora und Erdfauna zu handhaben, da es der reinen Trinkwasserklasse 0 zuzuordnen ist.

Die also in mehrfacher Hinsicht optimierte Wirkungsweise des erfindungsgemäßen Mittels bewirkt einerseits eine Schonung der Pflanzenzellen vor stressverursachenden Einflüssen (z. B. Keimen jeglicher Art) und andererseits die Zuführung vitalitätskräftigender, von der Pflanze aufgenommener Wirkstoffe.

Im einzelnen kann das Mittel nach den Umständen gemäß Anspruch 2 und bevorzugt gemäß den Ansprüchen 3 bis 5 zusammengesetzt sein und als Dosierung des Anzuchtgießwassers bzw. des Gieß- bzw. Bewässerungswassers eine Konzentration gemäß Anspruch 6 aufweisen, z. B. eine etwa 1 %tige wässrige Lösung sein.

Zur ergänzenden Entkeimung der Wurzelumgebung und der Pflanzenblätter und -zweige bzw. -stengel kann dem Mittel eine oxidierende Wirkung gemäß den Ansprüchen 7 bis 9 beigegeben sein.

Eine erfindungsgemäße Mittelkombination besitzt einen pH-Wert von etwa 2 bis 7, ist also vorwiegend schwach sauer.

Zwecks verbesserter Benetzung aller Pflanzenteile kann die Kombination auch ein oder mehrere Tenside gemäß Anspruch 11 aufweisen.

Bei der Behandlung von Pflanzen unter besonders keimgefährdeten Umständen kann dem Mittel auch ein wasserlösliches Silbersalz z. B. als Nitrat gemäß Anspruch 12 zugegeben sein, wobei die zulässige Unverträglichkeitsgrenze von 0,01 bis 0,02 % nicht überschritten bzw. wesentlich unterschritten wird.

Bei erwachsenen Pflanzen kann dem Mittel auch eine Komponente zum Schutz der Pflanzenoberfläche bzw. zur Beständigkeit des Mittels auf der Oberfläche, wie z. B. Wachs gemäß Anspruch 13 beigefügt sein.

Versuchsergebnis: Rot- und Weißweinstecklinge

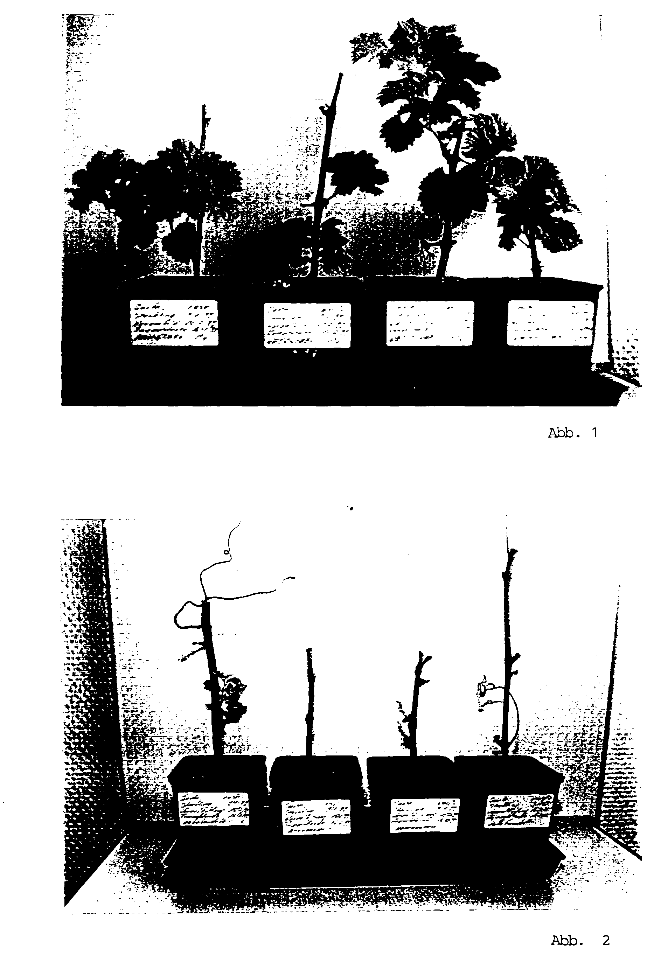

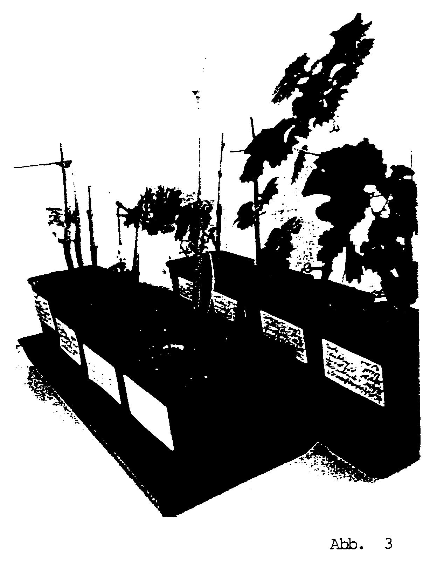

Rot- und Weißweinstecklinge wurden jeweils im gleichen Wasser am 09. Januar 1999 zur Wurzelbildung angesetzt und bei ansetzender Wurzelbildung am 16. Februar 1999 in Anzuchterde umgesetzt. (Abb. 1 und 2)

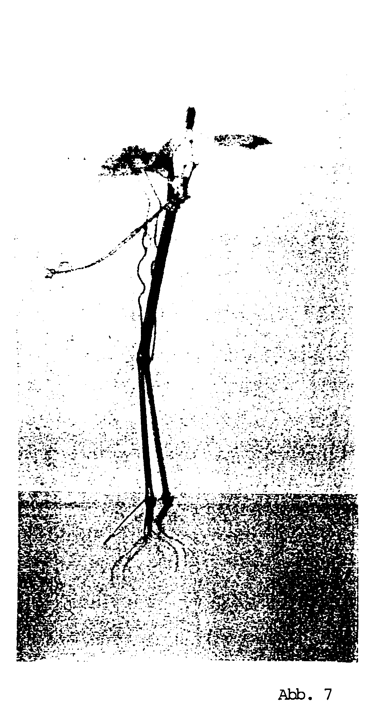

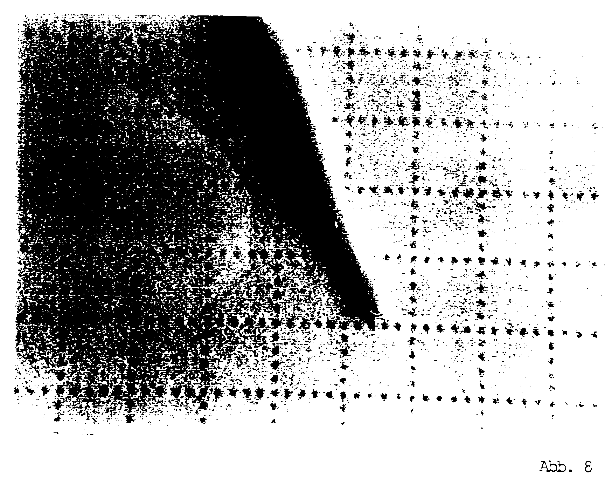

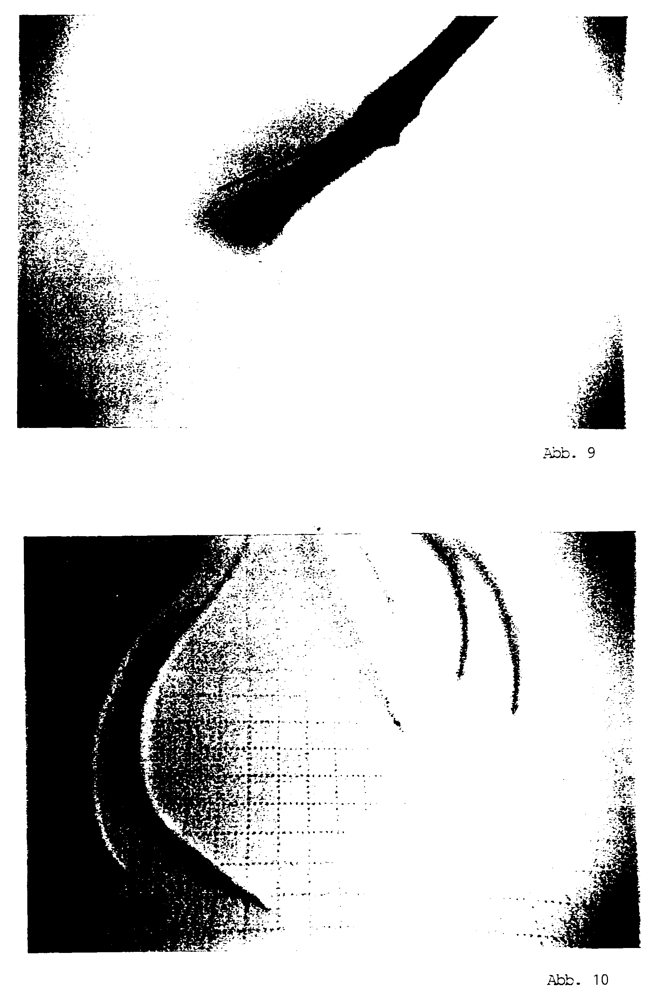

Die bei identischen Wärme- und Lichtverhältnissen sowie Mengenverhältnissen gezogenen Stecklinge wiesen die in den Fig. 7 bis 10 wiedergegebenen Wurzelbildungen auf.

Bei identischen Wärme- und Lichtverhältnissen sowie Mengenverhältnissen wurden je 4 Stecklinge nach dem Einpflanzen in die Anzuchterde jeweils lediglich mit reinem Wasser und jeweils mit dem Pflanzenstärkungs- und wachstumsfördernden Mittel gemäß den Ansprüchen 1 bis 10 in 1 %tiger wässriger Lösung gegossen. Vom Zeitpunkt der Einpflanzung in die Anzuchterde am 15. Februar 1999 bis Mitte März wurden die in Fig. 1 (mit dem Mittel) und in Fig. 2 (unbehandelt) gezeigten Wachstumsstadien erzielt. Von den ohne Pflanzenstärkungsmittel bewässerten Stecklingen waren zwei (halblinks und rechts außen) abgestorben.

Fig. 3 zeigt die Stecklinge der jeweils gleichen Rebsorte im zusammengestellten Vergleich nebeneinander: vorn unbehandelt, hinten behandelt.

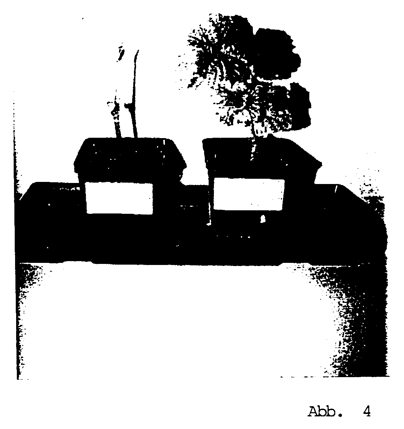

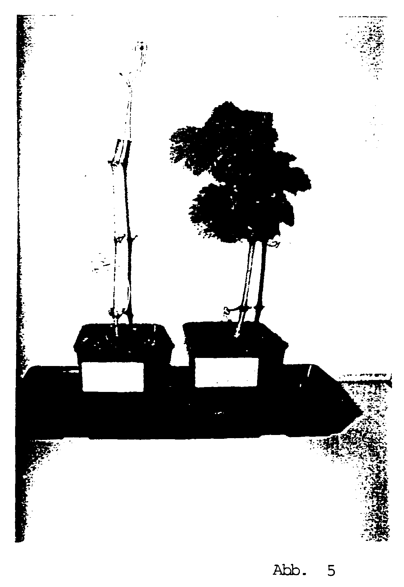

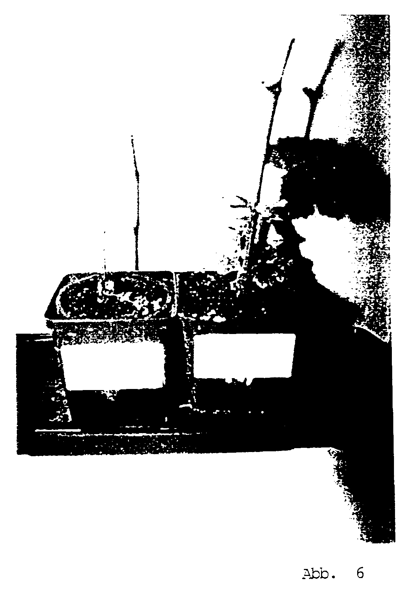

In den Fig. 4 bis 6 sind Stecklinge der jeweils gleichen Rebsorte (also weiß und rot) unmittelbar nebeneinander dargestellt, wobei die deutlich weiterentwickelten Stöcke mit dem Mittel behandelt sind. Fig. 5 und 6 zeigen die abgestorbenen Rebenstecklinge neben den behandelten gesunden.

Die Anzuchterde hatte vor der Bepflanzung eine Bodenkeimdichte von 12 Mio KBE/ml und nach dem Begießen mit der 1 %tigen wässrigen Lösung des Pflanzenstärkungs-und wachstumsfördernden Mittels von 4 Mio KBE/ml. Auch dadurch dominiert die Pflanze auf natürliche Weise, so dass die pflanzenstärkende Funktion des Mittels besonders zur Geltung kommt und der verstärkte Wachstumsdruck ungehemmt bleibt.

Wenn ein bestimmter Erdboden mit keimverseuchten Pflanzen bepflanzt war, ist davon auszugehen, dass die Verseuchungskeime, beispielsweise Krautfäule- und Pflanzenfäulekeime oder Getreidepilze, nach der Ernte in der Acker- bzw. Pflanzenkulturerde verbleiben und bei der Wiederbepflanzung von Anfang an wieder vorhanden sind und die Wiederbepflanzung befallen. Durch die dagegen eingesetzten üblichen chemisch-toxischen Bakterizide und Fungizide ist auch die Erde stark kontaminiert, so dass die gesamte Erdfauna, d. h. die Bodenlebewesen wie z. B. Regenwürmer geschädigt oder reduziert sind.

Die althergebrachte Fruchtwechselmethode hilft gegen die modernen giftigen Vertilgungsmittel nur bedingt und langfristig.

Aufgabe der Erfindung ist daher auch die Behandlung von Erdböden vor und nach der Aussaat mit dem stark keimreduzierenden biologischen Mittel nach den Ansprüchen 1 bis 10, das selbst untoxisch und lebensmittelrechtlich unbedenklich ist, um das Gleichgewicht zwischen den nützlichen und den schädlichen Bakterien und Pilzkeime der vorhergehenden Ernteperiode im Sinne der Stärkung des Pflanzenwachstums wachstumsfördernd zu beeinflussen.

Wichtiges Merkmal der Erfindung ist ein Verfahren nach Anspruch 14.

Bei der Behandlung der Böden durch diese rein biologische und synergistische Wirkmittel-Kombination nach den Ansprüchen 1 bis 10 hat sich überraschenderweise herausgestellt, dass das Vitalgleichgewicht zwischen wachstumsfördernden Keimen und wachstumsschädlichen Keimen im Sinne einer Stärkung des Pflanzenwachstums beeinflusst wird, in dem ein durch die für Keime nahrungsreiche verursachte Gleichgewichtskonstellation der Vorernte verändertes Vitalgleichgewicht wieder auf einen Normalzustand zurückgeführt wird. Möglicherweise sind dadurch die natürlichen, pflanzenbegünstigenden Keime, Bakterien und Pilze bzw. Pilzsporen durch den Einfluss der mit ihnen in Symbiose lebenden Erdfauna dabei eher nutzbar, um die normale, nicht schädliche Keimzusammensetzung des Bodens wieder zu bilden oder voll zu regenerieren. Es hat sich sogar herausgestellt, dass den Pflanzen bei der beschriebenen Bodenbehandlung weniger zusätzliche Düngemittel beigegeben zu werden brauchen.

Wenn dann die Pflanzen bis zur neuen Ernte nur noch mit dem voll biologisch abbaubaren, erfindungsgemäßen Mittel keimfrei, bzw. keimreduzierend behandelt werden, kann sich die Erdfauna, z. B. Regenwürmer, wieder gänzlich regenerieren, so dass bei eventuell mehrere Jahre systematisch wiederholter Anwendung des Verfahrens wieder eine natürliche Anbauweise und pflanzenstärkende Kondition der Erdböden erreicht werden kann.

Bei einer ergänzenden Versuchsdurchführung wurden die Stecklinge in der wurzelbildenden Phase im Wasser einerseits mit dem erfindungsgemäßen Mittel und andererseits ohne das Mittel angesetzt. Dabei ergab sich schon im Anfangsstadium ein mindestens 5- bis 20-fach stärkeres Wachstum der Wurzeln in dem mit dem Mittel versetzten Anzuchtwasser.

Von überragend unerwartetem Vorteil in der Beschleunigung, Vitalität, Fruchtbarkeit und Wirtschaftlichkeit bei der Verwendung des Mittels gemäß den Ansprüchen 1 bis 13 ist ganz generell ein Verfahren zur Aufzucht von Pflanzen mit optimalem Wuchs gemäß den Ansprüchen 15 bis 21.

Dabei wird sowohl bei der Bewässerung, der Anzucht und der Kultivierung der Pflanzen sowie der Befeuchtung der Umgebungsluft (Anspruch 20) das erfindungsgemäße Mittel verwendet.

Dabei wird die Vitalität der Pflanzen von der Stressbildung durch Verkeimungsungleichgewichte ihrer Umgebung, z. B. Erdboden, Bewässerung, bzw. bei ihrer Behandlung entlastet, ohne dass sie durch Pflanzenschutzmittel gegen auf der Pflanze selbst befindliche Keime behandelt zu werden braucht. Die Entlastung von den Umweltstressfaktoren gibt ihr die Stärke, mit an ihr unmittelbar angreifendem Bakterien-bzw. Pilzbefall von selbst fertig zu werden.

Dabei erfolgt die Behandlung der Substrate und Pflanzen insgesamt oder in einer bzw. mehrerer der vorgenannten Stufen jeweils einzeln oder vom Anfang bis zur Ernte in entkeimter bzw. keimarmer Umgebung, wodurch mit dieser Verwendung ein überraschender Erfolg in der Pflanzenkultivierung bis zu mindestens 50 % erreicht wird.

Dabei ist das Mittel völlig untoxisch, völlig biologisch abbaubar und bewirkt keine Allergien oder Resistenzen und hält auch Ungeziefer, wie jede Art von Fliegen, Schnecken und dergleichen - auch z. B. Mäuse - offensichtlich fern, ohne für unschädliches Kleingetier, z. B. Regenwürmer schädlich bzw. tödlich zu sein.

Bei der Verwendung des Mittels in der hydroponischen Pflanzen- und Fruchtkultur gemäß Anspruch 24 lassen sich mit der Beimischung des erfindungsgemäßen Mittels erhebliche Vorteile erreichen, indem in Doppelfunktion gleichzeitig das Bewässerungssystem keimfrei bzw. keimarm und fließ- und ablagerungsfrei, beispielsweise frei von Biofouling und Kalkverkrustungen gehalten wird. In diesem Sinne kann auch das Wasser, in dem die Wurzelbildung ohne Erde erfolgt, einen Gehalt an dem Pflanzenstärkungs- und wachstumsfördernden Mittel aufweisen.

Zusätzlich umfasst die Erfindung auch vorbehandelte Pflanzenkultursubstrate wie z. B. Blumen- und Recyclingerde und ein Verfahren zu deren Herstellung nach den Ansprüchen 25 und 26 und auch anderem Pflanzenkulturmaterial nach Anspruch 27. Grundsätzlich ergeben sich generell erhebliche Vorteile beim Pflanzenanbau, wenn gemäß Anspruch 28 die Luftfeuchtigkeit der Luft in Pflanzenkulturräumen mit dem Mittel nach einem der Ansprüch 1 bis 10 angereichert ist.

Das Mittel wirkt beispielsweise gegen Keime wie Bakterien (bakterizid), Pilze wie Schimmelpilze (fungizid), Pilzsporen und Blütenstaub, Hefen, Protozoen, Eukaryoten, Eiweißmoleküle, Enzyme, Makrophagen und auch molekularbiologische Schädlinge oder dergleichen, sowie niedrige Pflanzen wie Algen, sowie Protozoen (Einzeller), aber auch gegen Kleinlebewesen, Insekten, Milben, Parasiten durch Zerstörung deren Nachwuchs und Eier, sowie Biofouling und Epelithionbildung.

Konkret ist das erfindungsgemäße Mittel auch gegen sämtliche Arten von Aspergillus, Legionellen und Salmonellen, sowie beispielsweise auch

Escherichia coli, Klebsielle pneumoniae, Staphylococcus aureus, Pseudomonas aeruginosa, Streptococcus faecalis, Proteus mirabilis, Mycobacterium tuberculosis, Clostridium sporogens, Candida albicans
mit bis zu völliger Ausschaltung der vitalitätsreduzierenden Wirkung wissenschaftlich erprobt.

Das Mittel ist zudem gegen sämtliche Parasiten und Ungeziefer, z. B. Fliegen, Ameisen, Mücken, Schnecken, etc. äußerst wirksam abweisend und milben- sowie läuseschädigend.

## Patentansprüche

1. Biologisches, atoxisches Pflanzenstärkungs- und wachstunsförderndes Mittel mit einem oder mehreren Lebensmittel-Konservierungsstoffen sowie mindestens einer nicht-toxischen, insbesondere organischen Säure.

2. Mittel nach Anspruch 1, welches mindestens eine Kombination einer oder mehrerer Verbindungen aus der Gruppe der Verbindungen Citronensäure, Sorbinsäure, L-Ascorbinsäure und/oder Acetylsalicylsäure oder deren Derivate aufweist
mit mindestens einem Lebensmittel-Konservierungsstoff wie beispielsweise Benzoesäure und deren Derivate wie
Sorbinsäure, Citronensäure, Weinsäure, Milchsäure, Apfelsäure, Essigsäure, Bernsteinsäure, Acetylsalicyl- und L-Ascorbinsäure sowie
Natriumbenzoat, p-Hydroxybenzoesäure, Ameisensäure, Propionsäure und Abkömmlinge sowie Salze, Ester und/oder Mischungen derselben.

3. Mittel nach einem der Ansprüche 1 oder 2, gekennzeichnet durch 0,05 - 10 g, bevorzugt 0,2 - 6 g und besonders bevorzugt 0,3 - 4 g Natriumbenzoat und 0,1 - 10 g, bevorzugt 0,2 - 5 g und besonders bevorzugt 0,3 - 3 g Sorbinsäure.

4. Mittel nach einem der Ansprüche 2 oder 3, dadurch gekennzeichnet, dass die Citronensäure bis zu 1 bis 25 Gew.% ihrer Gesamtmenge durch L-Ascorbinsäure und/oder Acetylsalicylsäure ersetzt ist.

5. Mittel nach einem der vorhergehenden Ansprüche, dadurch gekennzeichnet, dass die organischen Säuren gesättigte oder ungesättigte Carbonsäuren mit 1-14 C-Atomen, bevorzugt 1-12 C-Atomen sind.

6. Mittel nach einem der Ansprüche 1 bis 5 in wässriger Lösung von 15 - 0,03 g Trockenmasse-Mittel, bevorzugt 10 - 0,1 g, insbesondere 8 - 0,1 g Trockenmasse-Mittel pro Liter Wasser.

7. Mittel nach einem der Ansprüche 1 bis 6, dadurch gekennzeichnet, dass es einen Anteil eines Oxidationsmittels wie eine Perverbindung aus z. B. einem Peroxid, wie Natrium-, Kalium-, Calcium- oder Wasserstoffperoxid oder einen Abkömmling einer Persäure wie Perborat, Perphosphat, Percarbonat oder eine stark oxidierende Verbindung wie ein Permanganat aufweist.

8. Mittel nach einem der Ansprüche 1 bis 7, dadurch gekennzeichnet, dass die Kombination von 50 bis 80 Gew.%, bevorzugt 55 bis 70 Gew.%, insbesondere 60 bis 65 Gew.% Citronensäure, 20 bis 50 Gew.%, bevorzugt 30 bis 45 Gew.%, insbesondere 35 bis 40 Gew.% einer festen Peroxoverbindung, sowie 0,3 bis 1 Gew.% eines Lebensmittel-Konservierungsstoffes aufweist, wobei die Summe aller Prozentsätze jeweils 100 ist.

9. Mittel nach einem der Ansprüche 6 und 7 mit 0,001 - 16 %, vorzugsweise 12 %, insbesondere 10 Vol.-% H₂O₂ pro Liter Wasser sowie gegebenenfalls Stabilisatoren für die Peroxidverbindung.

10. Mittel nach einem der vorhergehenden Ansprüche 1 bis 9, dadurch gekennzeichnet, dass die Lösung einen sauren PH-Wert zwischen etwa 2 und 7 aufweist.

11. Mittel, insbesondere nach einem der vorhergehenden Ansprüche, gekennzeichnet durch 0,1 bis 5 % eines oder mehrere Tenside, ausgewählt aus der Gruppe bestehend aus in der verwendeten Menge untoxischen anionischen und nichtionischen Tensiden, Seifen, Fettsäure-Aminocarbonsäurekondensate, Alkylbenzolsulfonate, Ligninsulfonate, Alkylsulfonate, Fettsäureestern, sulfatierten Fettsäureglyceriden, Betaine, Sulfobetaine, Saponine, Fettsäureester von Polyalkoholen, Oxyäthylierte Fettsäuren, etc., und insbesondere Natriumdodecylsulfonat und Natriumlaurylsulfat.

12. Mittel nach einem der vorhergehenden Ansprüche 1 bis 11, dadurch gekennzeichnet, dass ihm eine wasserlösliches Silbersalz in einem Anteil von vorzugsweise weniger als 0,2 % der Trockenmasse zugesetzt ist.

13. Mittel nach einem der vorhergehenden Ansprüche 1 bis 12, dadurch gekennzeichnet, dass ihm ein Oberflächenschutzmittel wie z. B. Wachs beigefügt ist.

14. Verfahren zur Behandlung von Pflanzen-Wachtumssubstraten wie Pflanzenkulturwasser, Ackererde, Humus und Pflanzenkulturerde insbesondere unter Verwendung des Mittels nach einem der vorhergehenden Ansprüche 1 bis 13 zur Stärkung des Pflanzenwachstums und Förderung des Ertrags.

15. Verfahren zum Anpflanzen und Kultivieren von Pflanzen unter Verwendung des Mittels nach den vorhergehenden Ansprüchen 1 bis 13, dadurch gekennzeichnet, dass es mit einem Mittel mit einem oder mehreren Lebensmittel-Konservierungsstoffen sowie mindestens einer nicht-toxischen, insbesondere organischen Säure in wässriger Lösung behandelt wird, und zwar durch Anfeuchten, Bewässern sowie Lagerung in mit dem Mittel angereicherter Luft.

16. Verfahren nach Anspruch 15, dadurch gekennzeichnet, dass die Pflanzen in einer stark verdünnten, wässrigen Lösung insbesondere nach Anspruch 6 gehalten werden.

17. Verfahren nach Anspruch 15, dadurch gekennzeichnet, dass eine Pflanzerde von dem Einsetzen des Saatguts oder der Stecklinge mit einer wässrigen Lösung des Mittels vorbehandelt wird.

18. Verfahren nach einem der vorhergehenden Ansprüche, gekennzeichnet durch die Verwendung eines mit einem Pflanzenstärkungsmittel gemäß den Ansprüchen 1 bis 13 versehenen Pflanzbodens.

19. Verfahren nach Anspruch 15, dadurch gekennzeichnet, dass die Pflanzen während ihrer gesamten Wachstumszeit unter Verwendung des Mittels nach den Ansprüchen 1 bis 13 bewässert werden.

20. Verfahren nach einem der vorhergehenden Ansprüche, gekennzeichnet durch die Verwendung einer mit einem Pflanzenstärkungsmittel gemäß den Ansprüchen 1 bis 13 versehenen Beregnungslösung.

21. Verfahren nach einem der Ansprüche 15 bis 19, dadurch gekennzeichnet, dass die Pflanzen mit dem Mittel besprüht werden.

22. Verfahren nach Anspruch 15, dadurch gekennzeichnet, dass die Umgebungsluft der Pflanzen mit mir dem Mittel angereicherter Luft behandelt ist.

23. Verfahren zur Aufzucht von Pflanzen mit optimalem Wuchs unter Verwendung des Mittels nach einem der Ansprüche 1 bis 13 bei mindestens einer der folgenden Verfahrensstufen
a) Lagerung und Saat- bzw. Stecklingsvorbereitung,
b) Behandlung des Verfahrenswassers, insbesondere aus Regen- und Brauchwasser, insbesondere auch im Umlaufverfahren
c) Vorbereitung des Aufzuchtsubstrats,
d) Aussetzen bzw. Anpflanzen der Saat und der Stecklinge bzw. Keimlinge
e) und deren Keimung bzw. Hochziehen im Anzuchtssubstrat bzw. im Kulturboden oder der Kulturflüssigkeit,
f) Behandlung der erwachsenen Pflanzen und bis zum Fruchtwachstum bzw. aufgewachsenem Zustand sowie
g) Verwendung von entkeimten Werkzeugen und Behältern bei allen Verfahrensstufen sowie
h) Beibehaltung von weitgehend entkeimter Atmosphäre (Luft) bei Kultur in geschlossenen Räumen wie z. B. Gewächshäusern.

24. Verfahren nach einem der vorhergehenden Ansprüche, gekennzeichnet durch die Verwendung einer mit einem Pflanzenstärkungsmittel gemäß den Ansprüchen 1 bis 13 versehenen Nährlösung.

25. Pflanzenkultursubstrat z. B. Humus bzw. Blumenerde, welches mit dem Mittel nach einem der Ansprüche 1 bis 13 vorbehandelt ist.

26. Verfahren zur Herstellung des Pflanzenkultursubstrats nach Anspruch 25, gekennzeichnet durch die Verwendung eines mit einem Pflanzenstärkungsmittel gemäß den Ansprüchen 1 bis 13 versehenen Humusbodens und dergleichen für Pflanzenkulturen.

27. Verfahren nach einem der vorhergehenden Ansprüche, gekennzeichnet durch die Verwendung von mit einem Pflanzenstärkungsmittel gemäß den Ansprüchen 1 bis 13 versehenes Pflanzenkulturmaterial wie z. B. Tonpartikel, Fasermaterial und dergleichen.

28. Verwendung des Mittels nach den Ansprüchen 1 bis 13 zur Anreicherung der Luftfeuchtigkeit in umgrenzten Pflanzenkultur-Räumen.
